# EUROPEAN PATENT APPLICATION

(11) **EP 4 614 717 A1**
(43) Date of publication of application: **10.09.2025**
(21) Application number: 22964260.8
(22) Date of filing: 09.12.2022
(51) Int. Cl.: H01M 50/593, H01M 50/588, H01M 50/503

(54) **ISOLATION PLATE ASSEMBLY, BATTERY MODULE, BATTERY PACK, AND ELECTRIC DEVICE**

(30) Priority: 31.10.2022 CN 202222868612 U
(71) Applicant: Contemporary Amperex Technology (Hong Kong) Limited, Hong Kong (HK)
(72) Inventor: CHEN, Yifeng, Ningde, Fujian 352100 (CN); PENG, Chenqin, Ningde, Fujian 352100 (CN); LI, Jinfeng, Ningde, Fujian 352100 (CN); CHEN, Kaihua, Ningde, Fujian 352100 (CN); HUANG, Yangzhi, Ningde, Fujian 352100 (CN)
(74) Representative: Gong, Jinping
(86) International application number: PCT/CN2022/138067
(87) International publication number: WO 2024/092965

(57) **Abstract**

An isolating plate assembly, a battery module, a battery pack, and an electrical device are provided. The isolating plate assembly includes an isolating plate (31), provided with a plurality of busbar mounting positions; busbars (32), mounted at the busbar mounting positions; an output electrode (33), having a first fixing portion (331) and a second fixing portion (332), the first fixing portion (331) being electrically connected to at least one busbar (32); and an insulating plate (34), having a first connecting portion (34a) and a second connecting portion (34b), the first connecting portion (34a) being connected to the isolating plate (31), and the second connecting portion (34b) being connected to the second fixing portion (332).

## Description

### CROSS-REFERENCE TO RELATED APPLICATIONS

This application claims the priority of Chinese patent application 202222868612.5 entitled "ISOLATING PLATE ASSEMBLY, BATTERY MODULE, BATTERY PACK, AND ELECTRICAL DEVICE" and filed on October 31, 2022, which is incorporated herein by reference in its entirety.

### TECHNICAL FIELD

This application relates to the field of battery technologies, and specifically, to an isolating plate assembly, a battery module, a battery pack, and an electrical device.

### BACKGROUND

A distance between an output electrode of a battery module or a battery pack and a cell assembly is not fixed. When the distance is long, the output electrode is excessively long, and is likely to crack and fail during transportation and latching.

### SUMMARY

In view of the foregoing problem, this application provides an isolating plate assembly, a battery module, a battery pack, and an electrical device, to provide a more stable connection to an output electrode, thereby preventing occurrence of the problem that the output electrode cracks and fails.

According to a first aspect, this application provides an isolating plate assembly, including:
an isolating plate, provided with a plurality of busbar mounting positions;
busbars, a busbar being mounted at each of the busbar mounting positions;
an output electrode, having a first fixing portion and a second fixing portion, the first fixing portion being electrically connected to at least one busbar; and
an insulating plate, having a first connecting portion and a second connecting portion, the first connecting portion being connected to the isolating plate, and the second connecting portion being connected to the second fixing portion.

In the technical solution of this embodiment of this application, the insulating plate is connected to the output electrode, the isolating plate is connected to the insulating plate, and the output electrode is electrically connected to the busbar, so that fixing of the output electrode can be strengthened, and occurrence of the problem that the output electrode cracks and fails during transportation and latching can be effectively prevented.

In some embodiments, the second connecting portion is bonded to the second fixing portion, and a glue layer is disposed between the second connecting portion and the second fixing portion.

Therefore, the output electrode can be more stably connected to the insulating plate, to prevent occurrence of the problem that the output electrode cracks and fails due to a relatively large torque that occurs during transportation and latching.

In some embodiments, the isolating plate includes:
a first insulating plate body; and
a second insulating plate body, the second insulating plate body and the first insulating plate body being stacked, the busbars being disposed between the first insulating plate body and the second insulating plate body, and the first connecting portion being located between the first insulating plate body and the second insulating plate body.

Therefore, the first connecting portion may be sandwiched between the first insulating plate body and the second insulating plate body, to implement a securer connection.

In some embodiments, the first connecting portion is connected to the first insulating plate body; and/or the first connecting portion is connected to the second insulating plate body.

Therefore, reliability of the connection between the insulating plate and the isolating plate can be further improved.

In some embodiments, at least one busbar of the plurality of busbars presses the first connecting portion against the first insulating plate body or the second insulating plate body.

Therefore, the insulating plate can be more securely fixed.

In some embodiments, the second fixing portion is a plate-shaped structure, and the second fixing portion is disposed above the second connecting portion in a transverse direction.

Therefore, the volume of the output electrode in a thickness direction of the isolating plate can be reduced, so that the battery module or the battery pack is more compact.

In some embodiments, an upper surface of the isolating plate is provided with a glue storage groove, the glue storage groove is located at a bottom of the output electrode, and the glue storage groove is configured to store glue, so that the bottom of the output electrode is bonded to the insulating plate.

Glue is injected into the glue storage groove. When the glue storage groove is filled with the glue, the second fixing portion of the output electrode can be fixedly bonded to the second connecting portion, so that the second fixing portion of the output electrode is more securely fixed.

In some embodiments, in a thickness direction of the isolating plate, the insulating plate is provided with a through glue injection hole, and the glue injection hole is configured to deliver glue to a top of a battery cell, so that a bottom of the insulating plate is fixedly bonded to the top of the battery cell.

The glue injection hole runs through the insulating plate, and glue may be injected into the glue injection hole from the top of the insulating plate, so that glue is injected after the isolating plate assembly is mounted, thereby facilitating mounting.

In some embodiments, an upper surface of the insulating plate is provided with a glue injection groove, a groove bottom of the glue injection groove is shallower than a groove bottom of the glue storage groove in the thickness direction of the isolating plate, the glue injection groove is provided with a glue discharge port, and the glue discharge port is in communication with the glue storage groove and is configured to discharge glue to the glue storage groove.

The groove bottom of the glue injection groove is shallower than the groove bottom of the glue storage groove. When glue is injected into the glue injection groove, the glue flows into the glue storage groove under the gravity of the glue, so that the bottom of the output electrode is insulatively fixedly bonded to the insulating plate. The disposition of the glue injection groove may better facilitate glue injection, and the isolating plate and the insulating plate do not need to be first applied with glue and then mounted together, thereby simplifying an assembly process.

In some embodiments, the glue injection hole is located in the glue injection groove.

Glue may be injected into the glue injection hole or the glue injection groove or into both the glue injection hole or the glue injection groove, to implement bonding and fixing between the insulating plate and the battery cell and between the insulating plate and the output electrode, so that operations are easier and more convenient.

In some embodiments, a reinforcing rib is disposed in the glue injection hole.

Therefore, the connection between the glue and the insulating plate can be implemented, thereby improving the strength of the insulating plate.

In some embodiments, a glue injection observation window is provided on the insulating plate, and the glue injection observation window runs through the insulating plate in a thickness direction of the insulating plate.

Therefore, it can be determined, by using the glue injection observation window, whether the amount of glue flowing from the glue injection hole to the battery cell is excessively large.

According to a second aspect, this application provides a battery module, including:
at least one battery cell; and
the isolating plate assembly of the first aspect, located at a top of the battery cell, the battery cell being connected to the insulating plate.

The battery module of this application includes the technical feature of the isolating plate assembly of the first aspect, and achieves an effect the same as that described above, and details are not described herein again.

In some embodiments, the top of the battery cell is fixedly bonded to a bottom of the insulating plate.

Therefore, the insulating plate can be made securer. Further, the second fixing portion of the output electrode is more reliably fixed, and occurrence of the problem that the output electrode cracks and fails during transportation and latching can be prevented.

According to a third aspect, this application provides a battery pack including the foregoing battery module.

The battery pack of this application includes the technical feature of the isolating plate assembly of the first aspect, and achieves an effect the same as that described above, and details are not described herein again.

According to a fourth aspect, this application provides an electrical device, including the battery module of the second aspect, the battery module being configured to supply electric energy; or including the battery pack of the third aspect, the battery pack being configured to supply electric energy.

In the technical solution of this embodiment of this application, the electrical device includes the technical feature of the isolating plate assembly, and achieves a technical effect the same as that described above, and details are not described herein again.

The above description only refers to an overview of the technical solution of this application. In order to understand the technical means of this application more clearly, it can be implemented according to the content of the description. In order to make the above-mentioned and other purposes, features and advantages of this application more apparent, the specific implementations of this application are listed below.

### BRIEF DESCRIPTION OF THE DRAWINGS

Various other advantages and benefits will become apparent to those of ordinary skill in the art upon reading the following detailed description of the preferred implementations. The accompanying drawings are only for the purpose of illustrating the preferred implementations and are not construed as limiting this application. In addition, in all the accompanying drawings, same parts are indicated by the same reference numerals. In the accompanying drawings:
FIG. 1 is a schematic diagram of a structure of a vehicle as an electrical device according to some embodiments of this application;
FIG. 2 is a schematic diagram of an exploded structure of a battery pack according to some embodiments of this application;
FIG. 3 is a schematic diagram of an exploded structure of a battery cell according to some embodiments of this application; and
FIG. 4 is a schematic diagram of a locally exploded structure of a battery pack according to some embodiments of this application, where a first insulating plate body is omitted in the figure;
FIG. 5 is a locally schematic diagram of a battery pack according to some embodiments of this application;
FIG. 6 is an axonometric drawing of an insulating plate of an isolating plate assembly according to some embodiments of this application; and
FIG. 7 is a locally cross-sectional view of an insulating plate of an isolating plate assembly according to some embodiments of this application.

Reference numerals in the specific implementations are as follows:
vehicle 1000;
battery pack 100;
battery pack housing 10, box 11, and upper cover 12;
battery cell 20, top cover assembly 21, electrode terminal 21a, housing 22, electrode assembly 23, positive electrode tab 23a, and negative electrode tab 23b;
isolating plate 31, first insulating plate body 311, second insulating plate body 312, busbar 32, output electrode 33, first fixing portion 331, second fixing portion 332, insulating plate 34, first connecting portion 34a, second connecting portion 34b, glue injection hole 341, glue injection groove 342, glue storage groove 343, enclosure 344, glue injection observation window 345, and thickness direction A of the isolating plate 31;
controller 200;
motor 300.

### DETAILED DESCRIPTION

The embodiments of the technical solutions of this application will be described in detail below with reference to the accompanying drawings. The following embodiments are only used to illustrate the technical solutions of this application more explicitly, and are thus only interpreted as examples, rather than used to limit the protection scope of this application.

Unless otherwise defined, all technical and scientific terms used herein have the same meaning as commonly understood by those skilled in the technical filed to which this application belongs. The terminology used herein is for the purpose of describing particular embodiments only and is not intended to limit this application. The terms "including" and "having" and any variations thereof in the description and claims of this application and the above description of the accompanying drawings are intended to cover non-exclusive inclusions.

**In** the description according to the embodiments of this application, the technical terms "first", "second", and the like are only used to distinguish different objects, and should not be understood as indicating or implying relative importance or implying the number, specific order or primary and secondary relationship of indicated technical features. In the description according to the embodiments of this application, "a plurality of" means two or more, unless otherwise expressly and specifically defined.

Reference herein to an "embodiment" means that a specific feature, structure, or characteristic described in connection with the embodiment can be included in at least one embodiment of this application. The appearances of the phrase in various places in the specification are not necessarily all referring to the same embodiment, nor a separate or alternative embodiment that is mutually exclusive of other embodiments. It shall be explicitly and implicitly understood by those skilled in the art that the embodiments described herein may be combined with other embodiments.

**In** the description of this application, the term "and/or" is merely an association to describe the associated objects. It can mean that there are three kinds of relationships, such as A and/or B, which means that A exists alone, A and B exist at the same time, and B exists alone. In addition, in this specification, the character "/" usually indicates an "or" relationship between the associated objects.

**In** the description of the embodiments of this application, the term "a plurality of" means two or more (including two). Similarly, "a plurality of groups" means two or more groups (including two groups), and "a plurality of pieces" means two or more pieces (including two pieces).

In the description according to the embodiments of this application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing this application and simplifying the description, rather than indicating or implying that the involved apparatus or element should have a specific orientation or should be configured or operated in the specific orientation, therefore, they cannot be understood as limiting this application.

In the description according to the embodiments of this application, unless otherwise expressly specified and defined, the technical terms "mounted", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For those of ordinary skill in the art, the specific meanings of the above terms in this application may be interpreted according to specific situations.

The applicant notes that after an output electrode and an output bar of a battery module or a battery pack are electrically connected, a part of the output electrode is suspended, to become a cantilever structure. During transportation and latching, the cantilever is far relative to a connection position of the output electrode and the output bar, and is subject to a large force, and the output electrode is prone to crack and fail during transportation and latching.

To resolve the foregoing problem, the applicant finds through research that an insulating plate may be disposed between a second fixing portion 332 of the output electrode and an isolating plate 31, and the second fixing portion 332 of the output electrode and the isolating plate 31 are separately fixed to the insulating plate, which can strengthen the output electrode, and can avoid occurrence of the problem that the output electrode is prone to crack and fail during transportation and latching.

An embodiment of this application provides an electrical device, including a battery cell, a battery module, or a battery pack. The battery module, the battery cell, or the battery pack supplies power to the electrical device. The electrical device may be, but is not limited to, a mobile phone, a tablet computer, a notebook computer, an electric toy, a power tool, an electric bike, an electric vehicle, a ship, a spacecraft, or the like. The electric toy may include a fixed or mobile electric toy, for example, a game console, an electric car toy, an electric ship toy, and an electric airplane toy. The spacecraft may include an airplane, a rocket, a space shuttle, a spaceship, and the like.

For ease of description, the following embodiments are described by using an example in which an electrical device according to some embodiments of this application is a vehicle 1000.

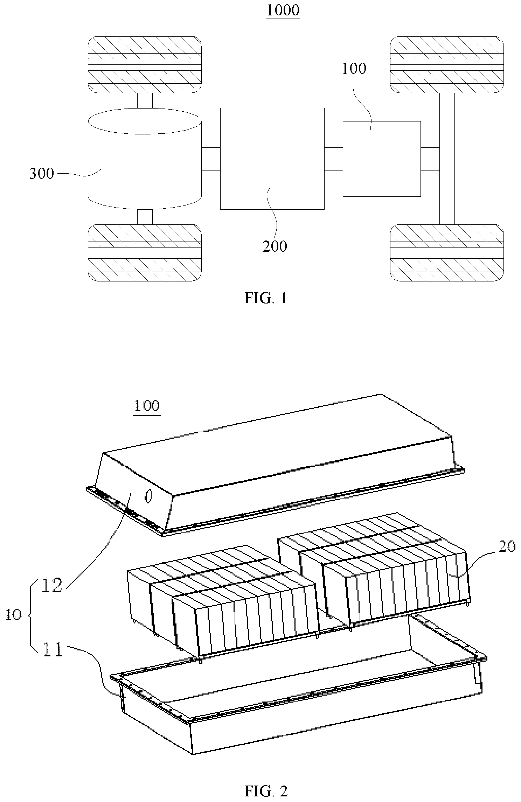

Referring to FIG. 1, FIG. 1 is a schematic diagram of a structure of a vehicle 1000 according to some embodiments of this application. The vehicle 1000 may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000 is provided with a battery pack 100. The battery pack 100 may be arranged at the bottom, head, or tail of the vehicle 1000. The battery pack 100 may be configured to supply power to the vehicle 1000. For example, the battery pack 100 may be used as a power supply for operating the vehicle 1000. The vehicle 1000 may further include a controller 200 and a motor 300. The controller 200 is configured to control the battery pack 100 to supply power to the motor 300, for example, to meet working power requirements during starting, navigation, and traveling of the vehicle 1000.

In some embodiments of this application, the battery pack 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is a schematic diagram of an exploded structure of a battery pack 100 according to some embodiments of this application. The battery pack 100 includes a battery pack housing 10 and at least one battery cell 20, and the battery cell 20 is accommodated in the battery pack housing 10. The battery pack housing 10 is configured to provide an accommodating space for the battery cells 20. The battery pack housing 10 may use a variety of structures. In some embodiments, the battery pack housing 10 may include a box 11 and an upper cover 12, the box 11 and the upper cover 12 cover each other, and the box 11 and the upper cover 12 jointly define the accommodating space for accommodating the battery cells 20. The upper cover 12 may be a hollow structure with one end being a guide entry, the box 11 may be a plate-like structure, and the box 11 covers a guide entry side of the upper cover 12, so that the box 11 and the upper cover 12 jointly define the accommodating space. Alternatively, the box 11 and the upper cover 12 each may be a hollow structure with one side being a guide entry, and a guide entry side of the box 11 covers a guide entry side of the upper cover 12. Certainly, the box 11 formed by the box 11 and the upper cover 12 may be in various shapes, such as a shape of T, and a cuboid.

In the battery pack 100, there may be a plurality of battery cells 20, and the plurality of battery cells 20 can be connected in series, parallel, or series-parallel. Series-parallel connection means that both series connection and parallel connection exist among the plurality of battery cells 20. The plurality of battery cells 20 may be directly connected in series, parallel, or series-parallel together, and then the whole formed by the plurality of battery cells 20 may be accommodated in the box 11. Certainly, the battery pack 100 may also be in the form of a battery module formed by the plurality of battery cells 20 that are first connected in series, parallel, or series-parallel. The plurality of battery modules are then connected in series, parallel, or series-parallel to form a whole and accommodated in the box 11. The battery pack 100 may also include other structures, for example, the battery pack 100 may also include a busbar component for achieving the electrical connection between the plurality of battery cells 20.

Each battery cell 20 may be a secondary battery or a primary battery, or may be a Li-S battery, a Na-ion battery, or a Mn-ion battery, but is not limited thereto. The battery cell 20 may be cylindrical, flat, cuboid, or in other shapes.

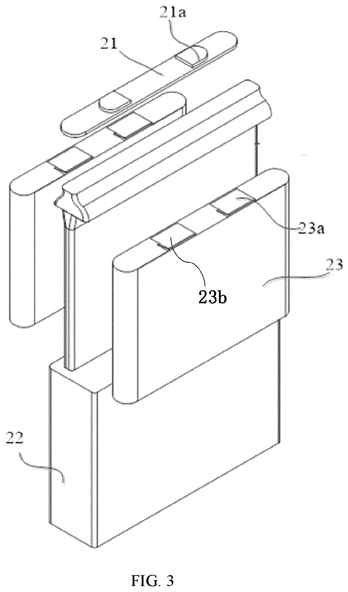

Referring to FIG. 3, FIG. 3 is a schematic diagram of an exploded structure of a battery cell 20 according to some embodiments of this application. The battery cell 20 is a smallest unit forming a battery pack. The battery cell 20 includes a top cover assembly 21, a housing 22, an electrode assembly 23, and other functional components.

The top cover assembly 21 refers to a component that covers a guide entry of the housing 22 to isolate an internal environment of the battery cell 20 from an external environment. A shape of the top cover assembly 21 is not limited and may be adapted to a shape of the housing 22 to fit the housing 22. Optionally, the top cover assembly 21 may be made of a material with specified hardness and strength (for example, aluminum alloy), so that the top cover assembly 21 is less likely to deform under extrusion and collision, enabling the battery cell 20 to have a higher structural strength and enhanced safety performance. Functional components such as electrode terminals 21a may be arranged on the top cover assembly 21. The electrode terminals 21a may be configured to electrically connect to the electrode assembly 23 to output or input electrical energy of the battery cell 20. In some embodiments, the top cover assembly 21 may also be provided with a pressure relief mechanism configured to relieve internal pressure when the internal pressure or temperature in the battery cell 20 reaches a threshold. The top cover assembly 21 may also be made of various materials, such as copper, iron, aluminum, stainless steel, aluminum alloy, and plastic, which are not particularly limited in the embodiments of this application. In some embodiments, an insulator may also be arranged on an inner side of the top cover assembly 21. The insulator can be configured to isolate electrical connecting portions in the housing 22 from the top cover assembly 21, reducing a risk of short circuit. For example, the insulator may be made of plastic or rubber.

The housing 22 is an assembly configured to form an internal environment of the battery cells 20 together with the top cover assembly 21, where the formed internal environment may be configured to accommodate the electrode assembly 23, an electrolyte, and other components. The housing 22 and the top cover assembly 21 may be separate components, a guide entry may be provided in the housing 22, and the top cover assembly 21 covers the guide entry to form the internal environment of the battery cell 20. Without limitation, the top cover assembly 21 and the housing 22 may also be integrated. Specifically, the top cover assembly 21 and the housing 22 may form a shared connection surface before other components are arranged inside the case, and then the top cover assembly 21 covers the housing 22 when inside of the housing 22 needs to be enclosed. The housing 22 may be of various shapes and sizes, such as a rectangular shape, a cylindrical shape, and a hexagonal prism shape. Specifically, the shape of the housing 22 may be determined based on a specific shape and size of an electrode assembly 23. The housing 22 may be made of various materials, such as copper, iron, aluminum, stainless steel, aluminum alloy, and plastic, which are not particularly limited in the embodiments of this application.

The electrode assembly 23 is a component in the battery cell 20 that undergoes electrochemical reactions. The housing 22 may include one or more electrode assemblies 23. The electrode assembly 23 is mainly formed by winding or laminating a positive electrode plate and a negative electrode plate, and an isolating plate is generally provided between the positive electrode plate and the negative electrode plate. Parts of the positive electrode plate and the negative electrode plate with active substances constitute a body portion of the electrode assembly, while parts of the positive electrode plate and the negative electrode plate without active substances separately constitute a tab. A positive electrode tab 23a and a negative electrode tab 23b may be located at one end of the body portion together or at two ends of the body portion separately. During charging and discharging of the battery, a positive electrode active substance and a negative electrode active substance react with an electrolyte, and the tabs are connected to the electrode terminals to form a current loop.

For ease of description, the following embodiments are described by using an isolating plate assembly according to some embodiments of this application as an example.

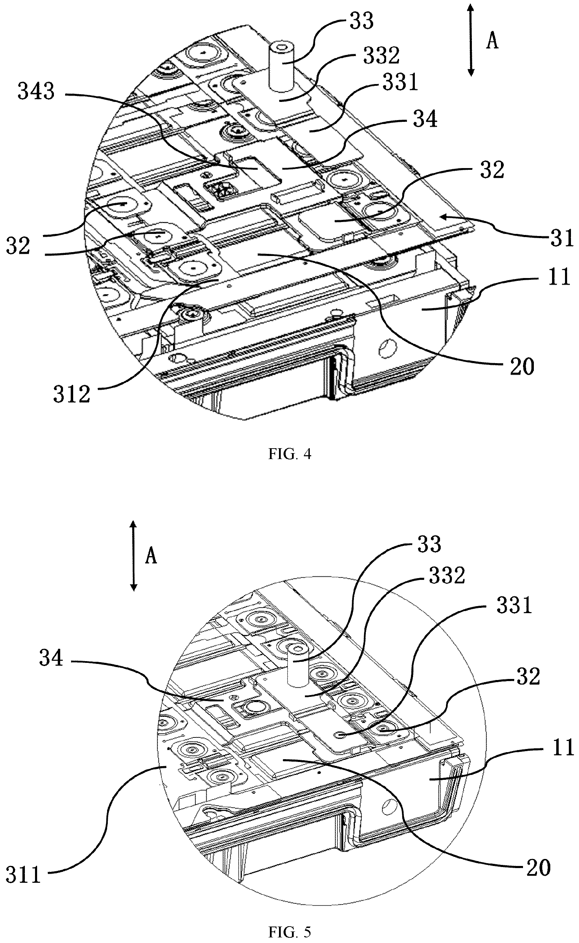

Referring to FIG. 4 to FIG. 6, the isolating plate assembly includes an isolating plate 31, busbars 32, an output electrode 33, and an insulating plate 34. The isolating plate 31 is provided with a plurality of busbar mounting positions. The busbars 32 are mounted at the busbar mounting positions. The output electrode 33 has a first fixing portion 331 and a second fixing portion 332, and the first fixing portion 331 is electrically connected to at least one busbar 32. The insulating plate 34 has a first connecting portion 34a and a second connecting portion 34b, the first connecting portion 34a is connected to the isolating plate 31, and the second connecting portion 34b is connected to the second fixing portion 332.

The isolating plate 31 may be a plate made of an insulating material, and may be specifically an insulating plastic plate.

The first fixing portion 331 and the second fixing portion 332 refer to different mounting positions of the output electrode 33.

The first connecting portion 34a and the second connecting portion 34b of the insulating plate 34 refer to different positions of the insulating plate 34.

The insulating plate 34 is connected to the output electrode 33, the isolating plate 31 is connected to the insulating plate 34, and the output electrode 33 is electrically connected to the busbar 32, so that fixing of the output electrode 33 can be strengthened, and occurrence of the problem that the output electrode 33 cracks and fails during transportation and latching can be effectively prevented.

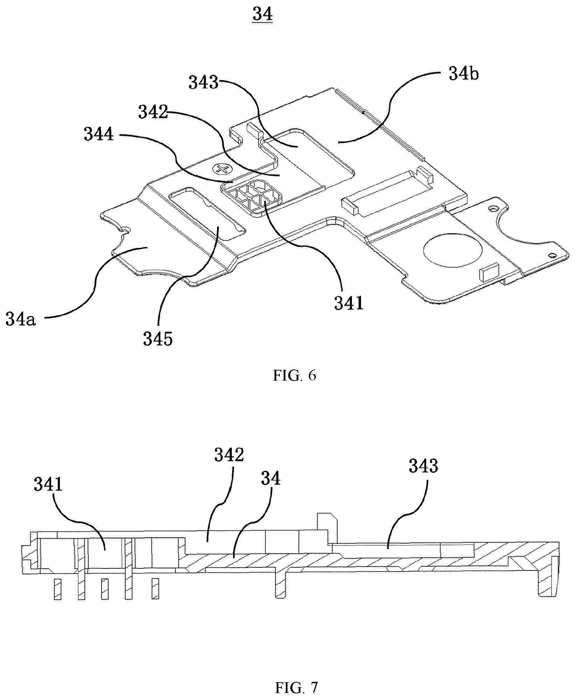

In some embodiments, referring to FIG. 5 and FIG. 6, the second connecting portion 34b is bonded to the second fixing portion 332, and a glue layer is disposed between the second connecting portion and the second fixing portion.

Therefore, the second fixing portion 332 of the output electrode 33 can be more stably connected to the insulating plate 34, to prevent occurrence of the problem that the output electrode 33 cracks and fails due to a relatively large torque that occurs during transportation and latching.

In some embodiments, referring to FIG. 4 and FIG. 6, the first insulating plate body 311 in FIG. 5 is relatively thin, and is a profiled structure. The profiled structure is similar to or the same as an outer shape of the busbar 32. The isolating plate 31 includes a first insulating plate body 311 and a second insulating plate body 312. The second insulating plate body 312 and the first insulating plate body 311 are stacked, the busbars 32 are disposed between the first insulating plate body 311 and the second insulating plate body 312, and the first connecting portion 34a is located between the first insulating plate body 311 and the second insulating plate body 312.

The second insulating plate body 312 and the first insulating plate body 311 are stacked, and may be welded together through hot melting, or may be fixed together through screwing or riveting, which is not specifically limited herein.

Therefore, the first connecting portion 34a may be sandwiched between the first insulating plate body 311 and the second insulating plate body 312, to implement a securer connection.

In some embodiments, the first connecting portion 34a is connected to the first insulating plate body 311; and/or the first connecting portion 34a is connected to the second insulating plate body 312.

That the first connecting portion 34a is connected to the first insulating plate body 311 means that the first connecting portion 34a and the first insulating plate body 311 are relatively immovable. A fixed connection manner may be, but is not limited to, a connection manner such as screwing, riveting, hot-melting, or integral injection-molding. That is, the first connecting portion 34a and the first insulating plate body 311 may be connected in a detachable manner, or may be connected in a non-detachable manner.

That the first connecting portion 34a is connected to the second insulating plate body 312 means that the first connecting portion 34a and the second insulating plate body 312 are relatively immovable. A fixed connection manner may be, but is not limited to, a connection manner such as screwing, riveting, hot-melting, or integral injection-molding. That is, the second connecting portion 34b and the first insulating plate body 311 may be connected in a detachable manner, or may be connected in a non-detachable manner.

Therefore, reliability of the connection between the insulating plate 34 and the isolating plate 31 can be further improved.

In some embodiments, referring to FIG. 4, at least one busbar 32 of the plurality of busbars 32 presses the first connecting portion 34a against the first insulating plate body 311 or the second insulating plate body 312.

There may be one, two, or more busbars 32 pressing the first connecting portion 34a against the first insulating plate body 311 or the second insulating plate body 312.

Therefore, the insulating plate 34 can be more securely fixed.

In some embodiments, the second fixing portion 332 is a plate-shaped structure, and the second fixing portion 332 is disposed above the second connecting portion 34b in a transverse direction.

The transverse direction may be any direction perpendicular to the thickness direction of the isolating plate 31, or may form an angle of approximately 90° with the thickness direction of the isolating plate 31. For example, the transverse direction may form any value between 75° and 90° with the thickness direction of the isolating plate 31, which is not specifically limited herein.

The second fixing portion 332 is disposed above the second connecting portion 34b in the transverse direction, that is, the second fixing portion and the second connecting portion are stacked. Therefore, space occupied by the output electrode 33 in a thickness direction A of the isolating plate 31 can be reduced, so that the battery module or the battery pack is more compact.

In some embodiments, referring to FIG. 4 and FIG. 6, an upper surface of the second connecting portion 34b is provided with a glue storage groove 343, the glue storage groove 343 is located at a bottom of the second fixing portion 332, and the glue storage groove 343 is configured to store glue, so that the bottom of the second fixing portion 332 is bonded to the second connecting portion 34b.

The shape of the glue storage groove 343 may be any shape, which is not specifically limited herein.

The upper surface of the second connecting portion 34b is a surface facing a side of the second fixing portion 332 of the output electrode 33.

Glue is injected into the glue storage groove 343. When the glue storage groove is filled with the glue, the second fixing portion 332 of the output electrode 33 can be fixedly bonded to the second connecting portion 34b, so that the output electrode 33 is more securely fixed.

In some embodiments, referring to FIG. 4, FIG. 6, and FIG. 7, in the thickness direction A of the isolating plate 31, the insulating plate 34 is provided with a glue injection hole 341 formed therethrough, and the glue injection hole 341 is configured to deliver glue to a top of the battery cell 20, so that the bottom of the insulating plate 34 is fixedly bonded to the top of the battery cell 20.

The glue injection hole 341 may be, but is not limited to, a square hole, a circular hole, or the like.

The glue injection hole 341 runs through the insulating plate 34, and glue may be injected into the glue injection hole 341 from the top of the insulating plate 34, so that glue is injected after the isolating plate assembly is mounted, thereby facilitating mounting.

In some embodiments, referring to FIG. 6, an upper surface of the insulating plate 34 is provided with a glue injection groove 342, a groove bottom of the glue injection groove 342 is shallower than a groove bottom of the glue storage groove 343 in the thickness direction A of the isolating plate 31, the glue injection groove 342 is provided with a glue discharge port, and the glue discharge port is in communication with the glue storage groove 343 and is configured to discharge glue to the glue storage groove 343.

Specifically, optionally, the upper surface of the insulating plate 34 may be provided with an enclosure 344 having an opening, an inner space of the enclosure 344 may form the glue injection groove 342, and the opening of the enclosure 344 is used as a glue discharge port. Alternatively, the enclosure 344 may not be disposed, and a groove is cut on the upper surface of the insulating plate 34 to serve as the glue injection groove 342.

The groove bottom of the glue injection groove 342 is shallower than the groove bottom of the glue storage groove 343, and a step is formed by bottom surfaces of the glue injection groove and the glue storage groove. When glue is injected into the glue injection groove 342, the glue can flow into the glue storage groove 343 from top to bottom, so that the output electrode 33 is bonded to the insulating plate 34. The disposition of the glue injection groove 342 may better facilitate bonding between the insulating plate 34 and the output electrode 33, and the isolating plate 31 and the insulating plate 34 do not need to be first applied with glue and then mounted together, thereby facilitating operations.

In some embodiments, referring to FIG. 6, the glue injection hole 341 is located in the glue injection groove 342.

A height of the top of the glue injection hole 341 may be greater than, equal to, or less than a height of a top edge of the glue injection groove 342.

For example, a height of the top of the glue injection hole 341 may be greater than a height of a top edge of the glue injection groove 342. Glue may be first injected into the glue injection hole 341. After the glue injection hole 341 is filled with the glue, the glue overflows from the glue injection hole 341 to the glue injection groove 342, and flows from the glue injection groove 342 into the glue storage groove 343. Alternatively, glue may be separately injected into the glue injection hole 341 and the glue injection groove 342.

For example, a height of the top of the glue injection hole 341 may be equal to a height of a top edge of the glue injection groove 342. Glue may be first injected into the glue injection hole 341. After the glue injection hole 341 is filled with the glue, the glue overflows from the glue injection hole 341 to the glue injection groove 342, and flows from the glue injection groove 342 into the glue storage groove 343. Alternatively, glue may be separately injected into the glue injection hole 341 and the glue injection groove 342.

For example, a height of the top of the glue injection hole 341 is less than a height of a top edge of the glue injection groove 342. Glue may be first injected into the glue injection groove 342, and the glue flows to both the glue injection hole 341 and the glue storage groove 343.

Glue may be injected into the glue injection hole 341 or the glue injection groove 342 or into both the glue injection hole 341 or the glue injection groove 342, to implement bonding and fixing between the insulating plate 34 and the battery cell 20 and between the insulating plate 34 and the output electrode 33, so that operations are easier and more convenient.

In some embodiments, referring to FIG. 6, a reinforcing rib is disposed in the glue injection hole 341.

The reinforcing rib may be, but is not limited to, a cross-shaped reinforcing rib, an X-shaped reinforcing rib, or the like.

Therefore, the connection between the glue and the insulating plate 34 can be implemented, thereby improving the strength of the insulating plate 34.

In some embodiments, referring to FIG. 6, a glue injection observation window 345 is provided on the insulating plate 34, and the glue injection observation window 345 runs through the insulating plate 34 in a thickness direction of the insulating plate 34.

The glue injection observation window 345 may be disposed at a side of the glue injection hole 341. Glue is injected into the battery cell 20 from the glue injection hole 341, and the glues flows in a transverse direction. When the glue flows to the glue injection observation window 345, it may be determined that too much glue has been injected, and the glue injection may be stopped.

Therefore, it can be determined, by using the glue injection observation window 345, whether the amount of glue flowing from the glue injection hole 341 to the battery cell 20 is excessively large.

For ease of description, the following embodiments are described by using a battery module according to some embodiments of this application as an example.

The battery module in this application includes the foregoing isolating plate assembly and at least one battery cell 20. The isolating plate assembly is located at a top of the battery cell 20, and the battery cell 20 is connected to the insulating plate 34.

That the battery cell 20 is connected to the insulating plate 34 means that the battery cell 20 and the insulating plate 34 are relatively fixed or immovable.

The battery module of this application includes the technical feature of the foregoing isolating plate assembly, and achieves an effect the same as that described above, and details are not described herein again.

In some embodiments, in some embodiments, the top of the battery cell 20 is fixedly bonded to a bottom of the insulating plate 34.

Specifically, optionally, the battery cell 20 may be fixedly bonded to the insulating plate 34 by injecting glue into the glue injection hole 341 of the insulating plate 34.

Therefore, the insulating plate 34 can be made securer. Further, the second fixing portion 332 of the output electrode 33 is more reliably fixed, and occurrence of the problem that the second fixing portion 332 of the output electrode 33 cracks and fails during transportation and latching can be prevented.

For ease of description, the following embodiments are described by using a battery pack according to some embodiments of this application as an example.

The battery pack in this application includes a battery module.

Specifically, the battery module is disposed in a box of the battery pack.

Because the battery module includes the technical feature of the foregoing isolating plate assembly, and achieves an effect the same as that described above, details are not described herein again.

For ease of description, the following embodiments are described by using an isolating plate assembly according to some embodiments of this application as an example.

Referring to FIG. 4 to FIG. 7, the isolating plate assembly includes an isolating plate 31, busbars 32, an output electrode 33, and an insulating plate 34. The isolating plate 31 is provided with a plurality of busbar mounting positions. A busbar 32 is insulatively mounted at each busbar mounting position. The output electrode 33 has a first fixing portion 331 and a second fixing portion 332, the first fixing portion 331 is electrically connected to one busbar 32 of the plurality of busbars 32, and the second fixing portion 332 is disposed further away from the busbar 32 than the first fixing portion 331 is. The insulating plate 34 has a first connecting portion 34a and a second connecting portion 34b, the first connecting portion 34a is connected to the isolating plate 31, and the second connecting portion 34b is insulatively connected to the second fixing portion 332.

The second connecting portion 34b is bonded to the second fixing portion 332, and a glue layer is disposed between the second connecting portion and the second fixing portion.

The isolating plate 31 includes a first insulating plate body 311 and a second insulating plate body 312. The second insulating plate body 312 and the first insulating plate body 311 are stacked, and the first connecting portion 34a is located between the first insulating plate body 311 and the second insulating plate body 312.

At least one busbar 32 of the plurality of busbars 32 presses the first connecting portion 34a against the first insulating plate body 311 or the second insulating plate body 312.

The first connecting portion 34a is connected to the first insulating plate body 311; and/or the first connecting portion 34a is connected to the second insulating plate body 312.

The second fixing portion 332 is a plate-shaped structure, and the second fixing portion 332 is disposed above the second connecting portion 34b in a transverse direction.

An upper surface of the second connecting portion 34b is provided with a glue storage groove 343, the glue storage groove 343 is located at a bottom of the second fixing portion 332, and the glue storage groove 343 is configured to store glue, so that the bottom of the second fixing portion 332 is bonded to the second connecting portion 34b.

In the thickness direction A of the isolating plate 31, the insulating plate 34 is provided with a glue injection hole 341 formed therethrough, and the glue injection hole 341 is configured to deliver glue to the top of the battery cell 20, so that the bottom of the insulating plate 34 is fixedly bonded to the top of the battery cell 20.

An upper surface of the insulating plate 34 is provided with a glue injection groove 342, a groove bottom of the glue injection groove 342 is shallower than a groove bottom of the glue storage groove 343 in the thickness direction A of the isolating plate 31, the glue injection groove 342 is provided with a glue discharge port, and the glue discharge port is in communication with the glue storage groove 343 and is configured to discharge glue to the glue storage groove 343.

The glue injection hole 341 is located in the glue injection groove 342.

Optionally, a reinforcing rib is disposed in the glue injection hole 341.

Optionally, a glue injection observation window 345 is provided on the insulating plate 34, and the glue injection observation window 345 runs through the insulating plate 34 in a thickness direction of the insulating plate 34.

In conclusion, it should be noted that the foregoing embodiments are for description of the technical solutions of this application only rather than for limiting this application. Although this application has been described in detail with reference to the foregoing embodiments, those of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. Especially, as long as there is no structural conflict, the various technical features mentioned in each embodiment can be combined in any way. This application is not limited to the particular embodiments disclosed herein, but includes all technical solutions that fall within the scope of the claims.

## Claims

1. An isolating plate assembly, comprising:
an isolating plate, provided with a plurality of busbar mounting positions;
busbars, mounted at the busbar mounting positions;
an output electrode, having a first fixing portion and a second fixing portion, the first fixing portion being electrically connected to at least one busbar; and
an insulating plate, having a first connecting portion and a second connecting portion, the first connecting portion being connected to the isolating plate, and the second connecting portion being connected to the second fixing portion.

2. The isolating plate assembly according to claim 1, wherein the second connecting portion is bonded to the second fixing portion.

3. The isolating plate assembly according to claim 1 or 2, wherein the isolating plate comprises:
a first insulating plate body; and
a second insulating plate body, the second insulating plate body and the first insulating plate body being stacked, the busbars being disposed between the first insulating plate body and the second insulating plate body, and the first connecting portion being located between the first insulating plate body and the second insulating plate body.

4. The isolating plate assembly according to claim 3, wherein the first connecting portion is connected to the first insulating plate body; and/or the first connecting portion is connected to the second insulating plate body.

5. The isolating plate assembly according to claim 3 or 4, wherein at least one busbar of the plurality of busbars presses the first connecting portion against the first insulating plate body or the second insulating plate body.

6. The isolating plate assembly according to any one of claims 1 to 5, wherein the second fixing portion is a plate-shaped structure, and the second fixing portion is disposed above the second connecting portion in a transverse direction.

7. The isolating plate assembly according to claim 6, wherein an upper surface of the second connecting portion is provided with a glue storage groove, the glue storage groove is located at a bottom of the second fixing portion, and the glue storage groove is configured to store glue.

8. The isolating plate assembly according to claim 7, wherein in a thickness direction of the isolating plate, the insulating plate is provided with a glue injection hole formed therethrough, and the glue injection hole is configured to deliver glue to a top of a battery cell.

9. The isolating plate assembly according to claim 8, wherein an upper surface of the insulating plate is provided with a glue injection groove, a groove bottom of the glue injection groove is shallower than a groove bottom of the glue storage groove in the thickness direction of the isolating plate, the glue injection groove is provided with a glue discharge port, and the glue discharge port is in communication with the glue storage groove and is configured to discharge glue to the glue storage groove.

10. The isolating plate assembly according to claim 9, wherein the glue injection hole is located in the glue injection groove.

11. The isolating plate assembly according to claim 10, wherein a reinforcing rib is disposed in the glue injection hole.

12. The isolating plate assembly according to any one of claims 9 to 11, wherein a glue injection observation window is provided on the insulating plate, and the glue injection observation window runs through the insulating plate in a thickness direction of the insulating plate.

13. A battery module, comprising:
at least one battery cell; and
the isolating plate assembly according to any one of claims 1 to 12, located at a top of the battery cell, the battery cell being connected to the insulating plate.

14. The battery module according to claim 13, wherein the top of the battery cell is fixedly bonded to a bottom of the insulating plate.

15. A battery pack, comprising the battery module according to claim 13 or 14.

16. An electrical device, comprising the battery module according to any one of claims 13 to 14, the battery cell being configured to supply electric energy; or comprising the battery pack according to claim 15, the battery pack being configured to supply electric energy.
